# DEMANDE DE BREVET EUROPEEN

(11) **EP 1 557 234 A1**
(43) Date de publication de la demande: **27.07.2005**
(21) Numéro de dépôt: 05300041.0
(22) Date de dépôt: 19.01.2005
(51) Int. Cl.: B23K 26/20, B23K 26/14, B23K 35/02, B23K 35/30, C22C 38/14

(54) **Procédé de soudage par laser d'acier, en particulier ferritique, avec apport de fil de soudage fusible et gaz de protection; fil fourré de soudage pouvant être utilisé dans ledit procédé**

(30) Priorité: 21.01.2004 FR 0450106
(71) Demandeur: LA SOUDURE AUTOGENE FRANCAISE, 75321 Paris Cédex 07 (FR); L'Air Liquide Société Anonyme à Directoire et Conseil de Surveillance pour l'Etude et Exploitation des Procédés Georges Claude, 75321 Paris Cedex 07 (FR)
(72) Inventeur: Bonnet, Christian, 95650 Puiseux-Pontoise (FR)
(74) Mandataire: Pittis, Olivier

(57) **Abrégé**

L'invention concerne un procédé de soudage par faisceau laser avec apport de fil de soudage fusible et gaz de protection, dans lequel ledit fil est fondu par ledit faisceau laser de manière à réaliser un joint de soudure sur au moins une pièce en acier à souder, de préférence la ou les pièces sont en acier ferritique, caractérisé en ce que ledit joint de soudure contient de 30 à 1000 ppm en poids de titane, au moins 0.7% en poids de manganèse, de 50 à 1000 ppm en poids d'oxygène, de 5 à 2500 ppm d'aluminium, moins de 10% de nickel et dont le rapport Al/O est inférieur à 2,5. L'invention porte aussi sur un fil fourré de soudage utilisable avec ce procédé.

## Description

La présente invention concerne un procédé de soudage laser des aciers ferritiques utilisant un fil d'apport et un fil fourré adapté à ce procédé.

Les soudures réalisées par soudage au laser sur des aciers ferritiques, tels que les aciers C-Mn définis par la norme EN 10025, les aciers micro-alliés définis par la norme EN 10113 ou encore les aciers dits "trempés- revenus" selon la norme EN 10137, présentent le plus souvent de faibles caractéristiques de résilience ou plus généralement de ténacité à basse température dans le métal fondu, ainsi que des valeurs de dureté dans cette même zone très supérieures à celle des métaux de base.

Ces caractéristiques métallurgiques médiocres limitent très fortement l'extension de du soudage laser dans certains domaines de l'industrie, en particulier dans les domaines de la construction navale, de la fabrication et la pose de tubes pour le transport des produits pétroliers, de l'offshore...

Ce problème résulte du fait que ces aciers ont été équilibrés chimiquement pour leur conférer les propriétés mécaniques visées compte tenu de leur procédé d'élaboration, c'est-à- dire des conditions de laminage et de refroidissement subséquent ou encore du traitement thermique qu'ils subissent lors de leur fabrication, par exemple sous forme de tôles ou de tubes.

En effet, les propriétés mécaniques d'un acier résultent, pour une part, de sa composition chimique et, pour une autre part plus importante, de sa microstructure.

La microstructure d'un acier et de la même manière d'une soudure, c'est-à-dire du métal fondu constitué par du métal déposé et du métal de base fondu lors de l'exécution de la soudure, se développe durant le refroidissement depuis l'état austénitique à haute température jusqu'à la température ambiante.

De là, pour une analyse chimique donnée, cette microstructure et par conséquent les propriétés mécaniques de l'acier (ou de la soudure) sont fonction des conditions de refroidissement.

Si l'on considère par exemple un acier contenant environ 0,12% en poids de carbone, avec une faible vitesse de refroidissement, sa structure est composée essentiellement de ferrite, c'est-à-dire d'atomes de fer empilés selon une structure cristallographique cubique centrée, et d'un faible pourcentage, typiquement de l'ordre de 13%, de perlite, c'est-à-dire de lamelles alternées de ferrite et de cémentite qui est le carbure de fer Fe₃C à 6,66% de carbone. Sa dureté Vickers est alors d'environ 130 et sa résistance à la rupture de l'ordre de 400 à 500 MPa.

En revanche, ce même acier aura une structure martensitique, c'est-à-dire une solution solide sursaturée de carbone dans le fer cubique centré, et une dureté Vickers de l'ordre de 400, tandis que sa résistance à la rupture sera de 1300 à 1400 MPa s'il subit un refroidissement extrêmement rapide depuis l'état austénitique (haute température).

Pour des vitesses de refroidissement comprises entre ces deux extrêmes, on verra se développer des structures mixtes composées de martensite, de bainite inférieure, de bainite supérieure, et de ferrite + perlite, auxquelles correspondront des propriétés mécaniques intermédiaires.

Les diagrammes de transformation en refroidissement continu, couramment appelés "diagrammes TRC", qui sont bien connu des métallurgistes, indiquent les diverses microstructures qui se développent ainsi que les duretés qui leur correspondent selon la vitesse de refroidissement pour un acier donné et les conditions standard d'austénitisation pour cet acier, à savoir la température (généralement 50°C au dessus du point de transformation complète en austénite) et la durée d'austénitisation (généralement 30 minutes).

De tels diagrammes montrent par ailleurs que pour un acier donné, l'écart de propriétés mécaniques entre la structure martensitique et la structure ferrite + perlite est d'autant plus important que sa teneur en carbone est élevée ; ils montrent aussi, si l'on compare les diagrammes d'aciers de diverses compositions, que les vitesses de refroidissement qui engendrent les différentes microstructures citées précédemment sont fonction de l'ensemble des éléments d'alliage de l'acier.

En effet, tous les éléments d'alliage ont une influence sur la trempabilité, c'est-à-dire l'aptitude d'un acier à acquérir une structure totalement martensitique, donc aussi sur la vitesse critique de trempe qui est la vitesse de refroidissement minimale depuis l'état austénitique permettant d'obtenir une structure 100% martensitique.

La teneur en carbone, en plus de jouer sur la trempabilité, conditionne aussi les propriétés mécaniques des diverses structures

Les procédés de soudage laser, de par la forte densité de puissance qui leur est associée et les vitesses de soudage élevées qu'ils permettent d'atteindre, conduisent à des vitesses de refroidissement très rapides.

Il s'ensuit alors qu'avec les aciers dits ferritiques, la microstructure de la soudure est très différente de celle du métal de base, ce qui conduit dans cette zone à des caractéristiques de dureté et de traction beaucoup plus élevées que celles des aciers assemblés mais aussi à une ductilité et une ténacité du joint soudé trop faibles pour beaucoup d'applications.

Ce phénomène peut être atténué par l'ajout d'un métal d'apport sous forme de fil "froid", c'est-à-dire un fil de soudage dévidé immédiatement en amont de l'impact du faisceau laser sur les tôles à assembler et fondu par le faisceau laser.

En effet, en procédant de la sorte, on cherche à ajuster la trempabilité du métal fondu le plus souvent en diminuant sa teneur en éléments d'alliage par rapport au(x) métal(aux) de base mais aussi, dans le cas des aciers très doux, c'est-à-dire ayant une limite d'élasticité inférieure à 240 ou 280 MPa, en l'augmentant.

Dans les deux cas, on cherche à ajuster la trempabilité du métal fondu pour que, sous l'effet du cycle thermique engendré par le soudage laser, il développe une microstructure moins fragile.

Cependant, procéder ainsi est souvent insuffisant car, avec les procédés de soudage laser actuels, la proportion de métal d'apport dans le métal fondu est le plus souvent de l'ordre de 10 % en poids et dépasse très rarement 30% en poids, ce qui, même en utilisant les fils les moins chargés en éléments d'alliage disponibles commercialement, c'est-à-dire des fils à 0,5% en poids de manganèse par exemple, ne permet pas d'abaisser suffisamment la trempabilité du métal fondu pour éviter la formation de structures dures et fragiles dans le cas des aciers qui, sans cette addition, conduisent déjà à une structure dure et fragile.

Par ailleurs, dans le cas des aciers très doux pour lesquels on peut être amené à vouloir augmenter la trempabilité pour éviter la formation d'une structure grossière et fragile, l'apport d'un fil plus chargé en éléments d'alliage que le métal à souder, afin d'obtenir dans le métal fondu une structure plus fine, n'apparaît pas la non plus comme une solution satisfaisante car cet affinement de la structure s'accompagne d'une forte augmentation de la dureté et ne conduit de ce fait qu'à une faible diminution de la fragilité.

Le problème qui se pose alors est d'améliorer les procédés de soudage laser de manière à pouvoir obtenir des soudures dont la microstructure est quasiment exempte de micro-constituants durs et fragiles, c'est-à-dire présentant des propriétés améliorées en termes de résilience et plus généralement de ténacité ainsi que des caractéristiques de traction plus en rapport avec celles des métaux de base , notamment un allongement augmenté, une résistance à la rupture et une limite d'élasticité plus faibles tout en restant supérieures à celles des matériaux assemblés.

Autrement dit, l'invention vise à améliorer les propriétés des joints de soudure obtenus par soudage au laser avec apport de fil fusible et gaz d'assistance.

La solution de l'invention est alors un procédé de soudage par faisceau laser avec apport de fil de soudage fusible et gaz de protection, dans lequel ledit fil est fondu par ledit faisceau laser de manière à réaliser un joint de soudure sur au moins une pièce en acier à souder, de préférence la ou les pièces sont en acier ferritique, caractérisé en ce que ledit joint de soudure contient de 30 à 1000 ppm en poids de titane, au moins 0.7% en poids de manganèse, de 50 à 1000 ppm en poids d'oxygène, de 5 à 2500 ppm d'aluminium et moins de 10% de nickel.

Selon le cas, le procédé de l'invention peut comprendre l'une ou plusieurs des caractéristiques techniques suivantes :
- la microstructure dudit joint de soudure comporte de la ferrite aciculaire.
- la soudure comprend de 30 à 800 ppm de titane et/ou de 100 à 450 ppm d'oxygène et/ou de 5 à 1000 ppm d'aluminium, de préférence de 50 à 500 ppm de titane et/ou de 120 à 300 ppm d'oxygène et/ou de 5 à 750 ppm d'aluminium.
- la soudure comprend de 0,7 à 2% de manganèse et/ou moins de 1500 ppm d'aluminium, de préférence de 0.8 à 1.5% de manganèse et/ou moins de 500 ppm d'aluminium, de préférence encore moins de 300 ppm d'aluminium.
- la soudure comprend de l'aluminium et de l'oxygène en des proportions telles que : [Al] / [O] < 2,5 où : [Al] est la proportion pondérale d'aluminium et [O] est la proportion pondérale d'oxygène, de préférence [AI] / [O] < 1,5.
- la soudure comporte moins de 0,6% molybdène, moins de 80 ppm de bore, moins de 1% de silicium, moins de 0.20% de carbone, moins de 0.035 % de soufre et/ou moins de 0.0035% de phosphore, de préférence moins de 0.3% de molybdène, moins de 50 ppm de bore, de 0.1 à 0.6% de silicium et de 0,03 à 0,13% de carbone.
- la soudure comprend moins de 0.07% de niobium, moins de 0.07% de vanadium, de 1 à 200 ppm d'azote et/ou moins de 1% de chrome, de préférence moins de 100 ppm d'azote, moins de 0.03% de niobium, moins de 0.05% de vanadium et moins de 0.3% de chrome.
- le gaz d'assistance du faisceau laser est un mélange gazeux contenant de l'oxygène jusqu'à 20% en volume et/ou du CO₂ jusqu'à 40% en volume. En fait, le pouvoir d'oxydation du gaz de protection sera ajusté, selon les cas, en fonction de la puissance du laser et la vitesse de soudage souhaitée pour obtenir de 100 à 450 ppm d'O₂ dans la soudure.
- le gaz d'assistance du faisceau laser est un mélange gazeux contenant, en outre, au moins un gaz inerte, de préférence de l'hélium, de l'argon ou leurs mélanges.
- le fil fusible est un fil plein ou un fil fourré contenant au moins les éléments titane, manganèse et fer, et éventuellement bore, molybdène, nickel, carbone, chrome ou autres.

L'invention concerne aussi un fil fourré de soudage fourré susceptible d'être utilisé dans un procédé de soudage par faisceau laser avec apport de fil de soudage fusible et gaz de protection selon l'une des revendications 1 à 10, comprenant 300 à 10 000 ppm de titane, de 400 à 5000 ppm d'oxygène, de 5 à 1000 ppm d'aluminium et éventuellement jusqu'à 1500 ppm de bore, le reste étant essentiellement constitué de fer et d'un ou plusieurs éléments d'alliage des aciers ferritiques. En particulier, il comporte un ou plusieurs éléments d'alliage choisis parmi le manganèse, le silicium, le molybdène, le nickel et le carbone.

De préférence, il comprend de 500 à 3000 ppm de titane, de 500 à 3 000 ppm d'oxygène, de 5 à 400 ppm d'aluminium, et/ou de 100 à 1000 ppm de bore, le reste étant essentiellement constitué de fer et d'un ou plusieurs éléments d'alliage des aciers ferritiques

Plus généralement, les soudures effectuées par les procédés traditionnels de soudage à l'arc peuvent présenter diverses microstructures parmi lesquelles il existe la structure appelée ferrite aciculaire qui possède d'excellentes propriétés de ténacité.

Ce type de micro-structure est spécifique aux soudures et ne se rencontre jamais dans les aciers, même lorsqu'on leur fait subir des conditions de refroidissement similaires à celles des soudures.

En revanche, dans les soudures effectuées par les procédés classiques, une telle micro-structure peut apparaître, dans certains cas, pour une très grande gamme de vitesses de refroidissement depuis l'état austénitique, y compris celles qui, dans le cas des aciers classiques, conduisent à des structures de trempe de type martensite et/ou bainite inférieure qui sont dures et fragiles, comme rappelé par le document Antunes M., Bonnet C., « Application d'un essai de trempabilité à la recherche des facteurs ayant une influence sur la formation de ferrite aciculaire », Journées d'information Métallurgie de la zone fondue, Société Française de Métallurgie/Société des Ingénieurs Soudeurs - Section sud-est, Conférence N°9, Publication de la Soudure Autogène, 1981.

La ferrite aciculaire n'existe dans le métal fondu qu'en présence de certaines inclusions qui servent de germes intragranulaires pour la ferrite lors de la transformation de l'austénite durant le refroidissement.

On sait que l'existence de ces inclusions dépend de la teneur en oxygène de la zone fondue mais, pour qu'il y ait germination intragranulaire de ferrite au refroidissement, il semble nécessaire que ces inclusions complexes présentent localement en leur surface de l'oxyde de titane TiO ou un oxyde de titane/manganèse MnTi₂O₄, comme décrit par Blondeau R., « Métallurgie et mécanique du soudage », Hermes Science, Lavoisier 2001, page 162.

Il est alors clair que le titane joue un rôle fondamental.

Toutefois, il ne suffit pas d'avoir un minimum de titane, typiquement quelques dizaines de ppm en poids, pour que celui-ci se retrouve sous l'une ou l'autre des formes souhaitées.

En effet, il est aussi indispensable que la cinétique des réactions d'oxydo-réductions qui conduisent à la formation des inclusions permette d'atteindre ce résultat.

Ainsi, en plus de la teneur en titane et de la teneur en oxygène, la nature et la quantité de l'ensemble des éléments désoxydants, c'est-à-dire les éléments ayant une forte affinité pour l'oxygène, tels que aluminium, silicium, calcium... éventuellement présents dans le métal fondu, vont aussi intervenir et avoir un impact non négligeable sur la micro-structure résultante, et ce, quelle que soit l'origine de ces éléments : fil, métal de base ou gaz.

De plus, la teneur en azote doit aussi intervenir car, si le titane et l'aluminium sont avides d'oxygène, ces éléments présentent aussi une forte affinité pour l'azote si bien que l'azote, ainsi que tous les éléments qui en sont avides, tels que le bore, le vanadium, le niobium..., vont interférer dans les réactions d'oxydo-réductions et conditionner l'apparition dans le métal fondu des inclusions nécessaires à la transformation de l'austénite en ferrite aciculaire.

Or, le métal fondu résultant du soudage laser avec ou sans métal d'apport ne réunit généralement pas les conditions nécessaires à la germination de la ferrite aciculaire si bien que le plus souvent il présente une microstructure martensitique ou martensite/bainite dure et fragile, incompatible avec un grand nombre d'applications.

Compte tenu de ce qui précède, la solution de l'invention permettant de pallier ces problèmes consiste à apporter, lors du soudage par laser, dans le métal fondu par le biais du fil ou préférentiellement du couple fil/gaz, les éléments permettant la formation d'inclusions favorables à la germination de la ferrite aciculaire.

Toutefois, pour ce faire, il faut tenir compte du fait que ce qui importe au final est l'analyse chimique du métal fondu, lequel résulte d'un mélange entre le métal de base et le métal déposé par le couple fil/gaz utilisé, la proportion de l'un et de l'autre s'exprimant généralement en soudage par le taux de dilution qui est la proportion de métal de base dans le métal fondu ; la proportion étant celle en poids, en volume ou en surface évaluée à partir d'une macrographie puisqu'il s'agit d'une proportion et que les densités du métal de base et du métal déposé sont quasiment les mêmes.

Ainsi, si l'on réalise par exemple une soudure dont le taux de dilution est de 80% en poids, la teneur en chacun des éléments dans le métal fondu sera égale à 80% de la teneur en cet élément dans le métal de base auquel s'ajoute 20% de la teneur en ce même élément dans le métal déposé par le fil ou le couple fil/gaz.

Ce qui précède montre que le problème est extrêmement complexe.

Cependant, les essais menés dans le cadre de la présente invention et donnés ci-dessous à titre illustratif, montrent qu'il est possible de proposer des solutions qui fonctionnent dans la plupart des cas, c'est-à-dire qui conduisent à la formation de microstructures non fragiles dans le métal fondu, en ajustant les proportions de certains éléments particuliers au sein de la soudure, donc également en contrôlant leurs proportions relatives dans les matériaux d'apport, notamment via le couple fil/gaz.

### Ajustement de la teneur en oxygène du métal fondu

Les aciers actuels ont une teneur en oxygène très faible, généralement moins de 30 ppm en poids, et contiennent le plus souvent une teneur résiduelle en aluminium, typiquement de l'ordre de 100 à 500 ppm en poids, car cet élément est utilisé comme élément de calmage, lors de l'élaboration de ces aciers.

De ce fait, tout l'oxygène présent dans ces aciers se retrouve sous forme d'inclusions d'aluminates, lesquelles ne sont pas susceptibles de servir de germe pour la ferrite aciculaire.

Même en ajoutant du titane par l'intermédiaire du fil d'apport, celui ci ne peut pas se retrouver sous la forme des oxydes nécessaires à la germination de la ferrite aciculaire car l'aluminium est plus réactif que le titane vis-à-vis de l'oxygène et de par l'élaboration même des aciers, il est toujours en excès par rapport à l'oxygène résiduel de l'acier.

Si l'on veut être en mesure de former des oxydes de titane dans le métal fondu, il faut donc impérativement augmenter sa teneur en oxygène par rapport à celle du métal de base de manière à ce que, même après réaction avec l'aluminium, il reste de l'oxygène en excès afin qu'il puisse réagir avec le titane.

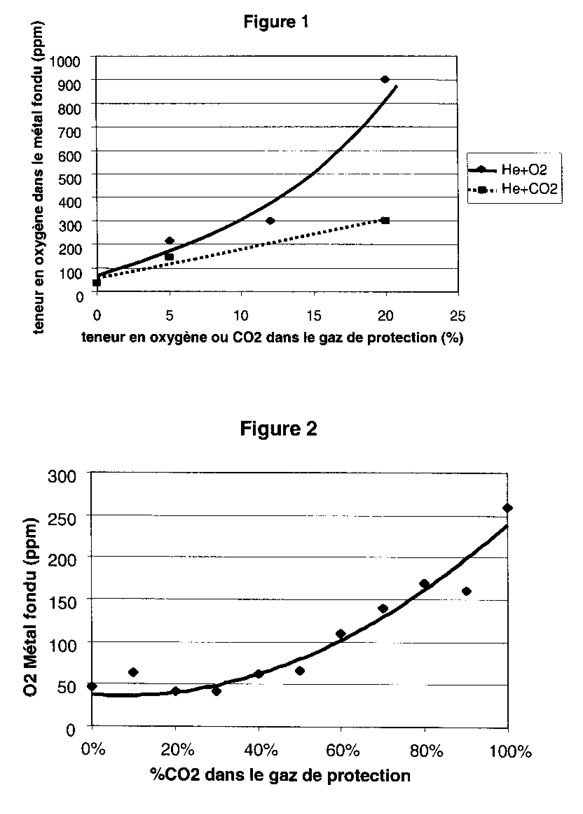

Plusieurs moyens peuvent être utilisés indépendamment ou conjointement pour apporter de l'oxygène dans le métal fondu :
- le gaz d'assistance utilisé pour le soudage laser peut contenir de l'oxygène ou du CO₂, ce dernier se décomposant en libérant de l'oxygène du fait des hautes températures existant au voisinage du métal liquide lors de l'exécution de la soudure, comme illustré sur les Figures 1 à 3 ci-annexées, et/ou
- le fil d'apport de type massif ou fourré dont la teneur en oxygène peut être beaucoup plus importante que celle du métal de base. Ainsi, un fil massif peut contenir plusieurs centaines de ppm d'oxygène et un fil fourré peut en contenir plusieurs milliers.

La Figure 1 montre l'évolution de la teneur en oxygène du métal fondu d'une soudure obtenue avec un dispositif laser de type CO₂ sans métal d'apport pour diverses teneurs en oxygène et en CO₂ dans le gaz d'assistance (hélium) et pour une puissance laser de 8 kW.

Les essais ont été réalisés sur une épaisseur soudée de 6 mm, à une vitesse de soudage de 1,5 m/min, pour un débit gaz de protection de 20 l/min ; la teneur en O₂ du métal de base était de 36 ppm (en poids).

Comme on le voit sur la figure 1, la proportion en oxygène du métal fondu d'une soudure augmente lorsque la teneur en oxygène ou en CO₂ dans le gaz d'assistance augmente.

De plus, il est à noter que la proportion d'oxygène incorporée dans le métal fondu est supérieure lorsque le gaz contient de l'oxygène plutôt que du CO₂ en proportion équivalente.

La figure 2 présente l'évolution de la teneur en oxygène dans le métal fondu en fonction de la teneur en CO₂ du gaz de protection dans le cas de soudure effectuées avec un laser YAG.

Les essais ont été effectués avec des tôles de 5 mm d'épaisseur en mettant en oeuvre une puissance laser de 4 kW, la vitesse de soudage était de 4 m/min et le débit de gaz de protection, à savoir un mélange argon/CO₂, était de 20 l/min.

On constate que comme dans le cas des soudures effectuées avec le laser CO₂, il existe une relation monotone croissante entre la teneur en CO₂ du gaz de protection et la teneur en oxygène du métal fondu.

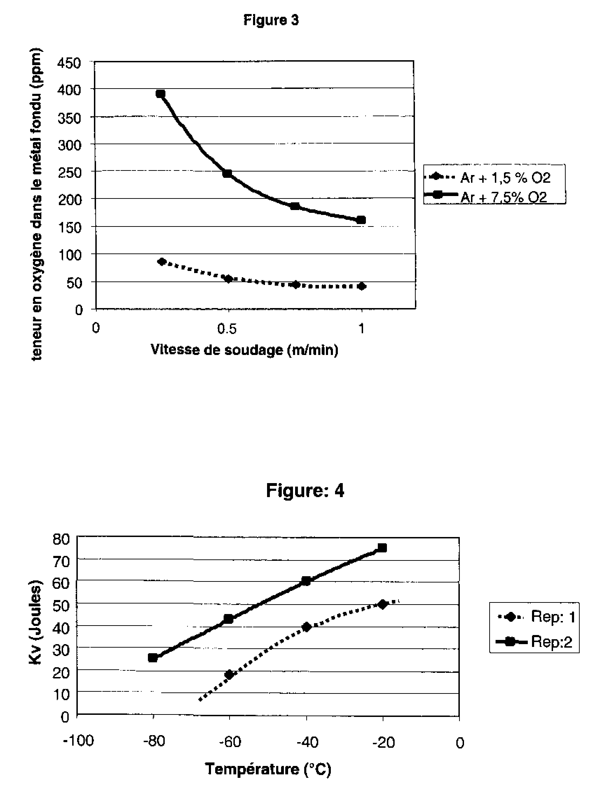

Par ailleurs, la Figure 3 montre l'évolution de la teneur en oxygène du métal fondu pour deux teneurs en oxygène dans le gaz d'assistance (argon dans ce cas) en fonction de la vitesse de soudage, pour une puissance laser de 5 kW.

Les essais ont été réalisés avec un dispositif laser de type CO₂ sans métal d'apport, pour une épaisseur soudée de 6 mm, pour un débit gaz de protection de 35 l/min et une teneur en O₂ du métal de base de 36 ppm (en poids).

Comme on le voit sur la Figure 3, la proportion en oxygène du métal fondu incorporée dans une soudure diminue lorsque la vitesse de soudage augmente, la proportion d'oxygène incorporée dans le métal fondu étant supérieure lorsque le gaz contient des proportions croissantes d'oxygène puisque la quantité d'oxygène incorporée dans le métal fondu est supérieure, lorsque le gaz contient 7.5% en volume d'oxygène, en comparaison avec un gaz contenant seulement 1.5% d'oxygène en volume.

Des tests complémentaires menés en parallèle montrent que la quantité d'oxygène à respecter dans les soudures doit être comprise entre approximativement 50 et 1000 ppm, mais, en fait, la limite inférieure est fonction de la teneur en aluminium du métal fondu, comme explicité ci-après. La limite supérieure résulte du fait que l'augmentation de la teneur en oxygène se traduit par une augmentation de la densité d'inclusions dans la soudure, ce qui engendre une diminution de l'énergie de rupture au niveau ductile (voir R. Blondeau : « Métallurgie et mécanique du soudage », Hermes Science, Lavoisier 2001). Il est donc inutile d'introduire plus d'oxygène que la quantité nécessaire à l'obtention des inclusions indispensables pour la germination de la ferrite aciculaire

### Ajustement de la teneur en titane du métal fondu

Le titane étant indispensable pour que les inclusions jouent effectivement le rôle de germes pour la transformation de l'austénite en ferrite aciculaire lors du refroidissement de la soudure, il s'avère nécessaire d'en apporter par l'intermédiaire du fil massif ou fourré si le métal de base, c'est-à-dire la ou les pièces à souder, n'en contient pas en quantité suffisante.

Ainsi, il a été remarqué que, quel que soit le procédé de soudage, il n'apparaît pas de ferrite aciculaire si la teneur en titane du métal fondu est inférieure à 30 ppm en poids et qu'au delà d'une certaine valeur pouvant varier entre environ 800 et 1000 ppm, la transformation en ferrite aciculaire est supprimée ou fortement détériorée.

Il faut donc que le métal fondu, c'est-à-dire le mélange du métal de base et du métal déposé en proportion du taux de dilution, contienne entre environ 30 et 1000 ppm de titane, préférentiellement entre 50 et 800 ppm en poids.

Idéalement, il faut que la composition chimique du métal déposé, laquelle résulte de la composition chimique du fil utilisé et des réactions avec le gaz d'assistance laser, contienne une quantité de titane suffisante pour que, lorsque le métal déposé issu de la fusion du fil se mélange avec le métal de base en proportion correspondant au taux de dilution, le mélange ainsi obtenu contienne une teneur en titane comprise entre environ 30 et 1000 ppm.

En pratique, étant donné que la gamme de teneur en titane acceptable est relativement large, atteindre cet objectif est relativement simple car la plupart des métaux de base ne contiennent pas de titane et pour les autres, leur teneur est généralement inférieure à 200 ou 250 ppm.

Dans ces conditions, on voit que si on utilise un fil équilibré chimiquement pour déposer, avec le gaz utilisé, un métal qui contient entre 150 et 1000 ppm en poids de titane, le mélange avec le métal de base aura une teneur en titane dans le domaine requis pour la transformation en ferrite aciculaire pour un taux de dilution compris entre 80% et 0%, si l'on soude un acier ne contenant pas de titane, et quel que soit le taux de dilution si l'on soude un acier qui en contient typiquement moins de 800 ppm.

L'analyse du métal déposé n'est jamais identique à l'analyse du fil et le coefficient de transfert des divers éléments, c'est-à-dire le rapport entre la teneur en cet élément dans le métal déposé à sa teneur dans le fil, est fonction de tous les éléments présents dans le fil mais aussi, pour certains éléments, de la nature du gaz de protection.

Ainsi, si on veut avoir 200 ppm de titane dans le métal déposé, la teneur dans le fil ne sera pas la même selon les autres éléments présents, tels C, Mn...

Autrement dit, pour que la teneur en titane du métal fondu soit comprise entre 30 et 1000 ppm, de préférence entre 50 et 800 ppm, il faut alors, si le métal de base dilué dans le métal fondu ne permet pas d'atteindre la valeur minimale, apporter le titane nécessaire au moyen du fil d'apport en tenant compte du taux de dilution, tel qu'expliqué précédemment, mais aussi du coefficient de transfert en titane entre le fil et le métal déposé, le coefficient de transfert étant le rapport entre la teneur en titane du métal déposé et celle du fil utilisé. Ce coefficient est toujours inférieur à 1 et il est d'autant plus faible que le pouvoir d'oxydation du gaz utilisé est important, c'est-à-dire que le gaz d'assistance dans le cas du soudage laser contient plus d'oxygène et/ou de CO₂.

### Ajustement de la trempabilité du métal fondu

La trempabilité est une notion bien connue des métallurgistes qui traduit l'aptitude d'un acier à acquérir une structure 100% martensitique.

La trempabilité peut être caractérisée notamment par la vitesse critique de trempe qui est la vitesse de refroidissement depuis l'état austénitique (haute température : en général supérieure à 900°C pour les aciers rencontrés en soudage) la plus lente qui permet de conférer à l'acier considéré une structure 100% martensitique.

Elle peut être évaluée à partir des diagrammes de transformations en refroidissement continu (TRC) qui traduisent sous forme graphique les diverses transformations structurales que subit un acier en fonction de la vitesse de refroidissement depuis l'état austénitique.

Plus le diagramme TRC est décalé vers la droite (temps long) dans les axes température/temps, moins la vitesse critique de trempe est grande et plus l'acier présente une trempabilité élevée.

Si les conditions sont réunies pour que les inclusions puissent être actives en tant que germes pour la transformation de l'austénite en ferrite aciculaire dans une soudure, ce qui dépend notamment des équilibrages en titane, aluminium, oxygène,... tel qu'expliqué précédemment, il faut aussi, pour que cette microstructure apparaisse, que l'austénite ne se soit pas préalablement transformée en produit de décomposition se formant à une température supérieure à celle de la ferrite aciculaire, sachant que la ferrite aciculaire se forme au refroidissement entre 550 et 450°C.

En effet, certains autres constituants microstructuraux, tels que ferrite de windmanstatten, perlite ou bainite granulaire, peuvent apparaître à des température supérieures.

Il faut donc que le métal fondu ait une trempabilité suffisante pour éviter la transformation de l'austénite à une température supérieure à 550 °C dans les conditions de refroidissement propres aux soudures laser.

Autrement dit, il faut veiller à ce que la trempabilité du métal fondu, résultant du mélange du métal de base et du métal déposé en fonction du taux de dilution, ne soit pas trop faible pour éviter que l'austénite se transforme en constituants grossier et donc peu résilient avant d'atteindre le domaine de température permettant la transformation en ferrite aciculaire (en dessous de 550°C) ni trop grande afin d'éviter que l'austénite ne se transforme en martensite y compris en présence des inclusions favorables à la germination de la ferrite aciculaire.

La composition chimique du fil qui influence évidemment la trempabilité du métal déposé doit donc être équilibrée en tenant compte de l'analyse du métal de base, du taux de dilution et des coefficients de transfert des divers éléments chimiques lesquels, tout comme pour le titane, sont fonction du pouvoir d'oxydation du mélange gazeux dans lequel transitent les gouttes de métal depuis le fil vers le bain de fusion, durant le soudage.

Bien que les cycles thermiques engendrés par le soudage laser soient très rapides en comparaison des cycles thermiques engendrés par les procédés de soudage plus classiques de type MIG/MAG, arc submergé, plasma ..., dans le cadre de l'invention, il n'a jamais été observé de formation de ferrite aciculaire dans des cordons obtenus par procédé laser dont la teneur en manganèse était inférieure à 0,7%.

Il conviendra donc de respecter dans le métal fondu une teneur minimale en manganèse de 0.7%, de préférence d'au moins 1%.

En outre, il a été observé que la présence d'éléments d'alliage complémentaires, tels que molybdène, nickel, chrome ou bore, augmente généralement la proportion de ferrite aciculaire dans le métal fondu, cela étant particulièrement prononcé pour le bore surtout lorsqu'il est associé au molybdène, mais des additions trop importantes peuvent être préjudiciables car une trop forte trempabilité du métal fondu conduira à une structure martensitique dure et fragile et ce, même si les inclusions nécessaires à la germination de la ferrite aciculaire sont présentes.

La distinction faite entre le bore et le molybdène par rapport aux autres éléments d'alliage, s'explique par le fait que l'action de ces éléments sur la trempabilité est plus importante sur les transformations se produisant à haute température, c'est-à-dire à plus de 550°C, ce qui correspond à la partie haute des diagrammes TRC, que sur celles se produisant à plus basse température, c'est-à-dire à moins de 550°C.

Ainsi, en plus de la teneur minimale en manganèse de 0,7%, préférentiellement d'au moins 1% en poids, il peut être intéressant d'introduire du bore et/ou du molybdène dans le métal fondu afin d'augmenter la proportion de ferrite aciculaire dans la soudure et par la même les résiliences à basse température,

### Ajustement de la teneur en oxygène du métal fondu

Les expériences menées dans le cadre de la présente invention ont montré qu'il est aussi nécessaire, pour obtenir une structure riche en ferrite aciculaire dans la soudure et par la même de bonnes ténacités à basse température, que le rapport Al/O soit inférieur à 2.5, de préférence inférieur à 1.5, la soudure contenant toujours au moins 5 ppm d'aluminium, l'aluminium se retrouvant au coeur des inclusions qui servent de germes pour la transformation de l'austénite en ferrite aciculaire.

En effet, pour obtenir de bonnes valeurs de ténacité à basse température dans une soudure obtenu par procédé laser et éviter d'avoir des duretés trop élevées dans le métal fondu, il faut former dans le métal fondu des inclusions susceptibles de servir de germes pour que la transformation de l'austénite au refroidissement produise de la ferrite aciculaire et, donc, comme indiqué précédemment, il faut que ces inclusions d'oxydes riches en titane puissent se former autour des aluminates, ceux-ci apparaissant en premier ; pour ce faire, il faut que tout l'oxygène présent dans le métal fondu ne soit pas intégralement lié à l'aluminium dont la réactivité vis à vis de l'oxygène est supérieure à celle du titane.

L'expérience montre que cela n'est le cas que si le rapport pondéral Al/O dans le métal fondu est inférieur à 2,5.

Pour satisfaire cette condition, l'aluminium provenant essentiellement de la dilution du métal de base dans la soudure, il convient d'enrichir le métal fondu en oxygène par l'intermédiaire du fil, du gaz de soudage ou de la combinaison fil/gaz mise en oeuvre lors du soudage laser.

Des essais réalisés dans le cadre de la présente invention (voir ci-après) montrent que d'excellents résultats de ductilité, ténacité et résilience, sans dureté excessive, sont obtenus dans des soudures réalisés par mise en oeuvre d'un procédé laser, lorsque l'analyse du métal fondu, c'est-à-dire de la soudure, contient les éléments donnés dans le Tableau 1 suivant (teneurs exprimées en proportion pondérale), le reste étant constitué de fer et des inévitables impuretés et résiduels liés à l'élaboration des aciers.

**Tableau 1**

| C | Si | Mn | S | P | O | Al | Ti | Ni |
|---|---|---|---|---|---|---|---|---|
| < 0,2 % | < 1% | 0.7 à 1.8 % | < 0.035 % | < 0.035 % | 30 à 650 ppm | 5 à 1600 ppm | 30 à 1000 ppm | < 10 % |

| Mo | Cr | N | B | Nb | V | Al/O |
|---|---|---|---|---|---|---|
| < 0,6% | < 1% | 10 à 200 ppm | < 80 ppm | < 0,07 % | < 0,07% | < 2,5 |

Toutefois, les soudures présentent de meilleures caractéristiques lorsqu'elles contiennent les éléments du Tableau 1 dans les proportions préférentielles du Tableau 2 suivant (teneurs exprimées en proportion pondérale).

**Tableau 2**

| C | Si | Mn | S | P | O | Al | Ti | Ni |
|---|---|---|---|---|---|---|---|---|
| 0,03 à 0,13% | 0,1 à 0,6% | 0,8 à 1.5% | < 0.035 % | < 0.035 % | 70 à 300 ppm | 5 à 450 ppm | 50 à 500 ppm | < 3.5 % |

| Mo | Cr | N | B | Nb | V | Al/O |
|---|---|---|---|---|---|---|
| < 0,3% | < 0.3 % | 10 à 100 ppm | < 50 ppm | < 0,03 % | < 0,05% | < 1,5 |

Les plages analytiques des Tableaux 1 et 2 correspondent au métal fondu qui résulte de l'analyse du métal de base ou des métaux de base si l'on assemble par soudage deux pièces en des aciers différents, et de celle du métal déposé dépendant du fil, du gaz ou du couple fil/gaz, et en prenant en compte le taux de dilution.

En pratique, pour satisfaire ces fourchettes et obtenir une soudure selon l'invention, il convient de procéder comme suit.

On détermine la composition du métal de base constituant les pièces à assembler (ou la pièce s'il s'agit de souder les bords d'un tube) ou une composition moyenne correspondant à celles des deux métaux de base si les pièces sont en des aciers différents.

On évalue le taux de dilution, c'est-à-dire la proportion du métal de base dans la soudure à réaliser.

On détermine ensuite la composition du métal à déposer (couple fil/gaz) pour que le mélange métal de base + métal déposé conduise à une composition du métal fondu, c'est-à-dire de la soudure, dans les plages des tableaux 1 ou 2 ci-dessus, en prenant en compte le taux de dilution évalué.

Ainsi, par exemple, si la teneur en manganèse (Mn) du métal de base est de 1% et que le taux de dilution est estimé à 80%, la fourchette préférentielle (voir Tableau 2) en manganèse pour le métal fondu comprise entre 0,8 et 1,5% est respectée si la teneur en manganèse du métal déposé (couple fil/gaz) est comprise entre 0 et 3,5% puisque, pour une teneur en Mn de 1% dans le métal de base (i.e. dans l'acier des pièces à souder) et un taux de dilution de 80%, on obtiendra une soudure, c'est-à-dire un métal fondu, contenant 80% de Mn issu du métal de base et donc 20 % de Mn issu du métal déposé (couple fil/gaz).

Donc, pour obtenir une soudure contenant 0.8% de Mn (valeur basse de la plage du tableau 2), alors il convient d'utiliser un fil (métal déposé) exempt de Mn, c'est-à-dire sans Mn. Autrement dit, dans ce cas, tout le manganèse qui se retrouvera dans la soudure est uniquement issu de l'acier des pièces à souder.

Par contre, pour obtenir une soudure contenant 1.5 % de Mn (valeur haute de la plage du Tableau 2), il convient d'utiliser un couple fil/gaz conduisant à un métal déposé contenant environ 3.5 % de Mn, puisque, dans ce cas, le manganèse qui se retrouvera dans la soudure sera issu à 80% de l'acier des pièces à souder (soit 0,8% sur les 1,5% souhaités) et à 20% du couple fil/gaz (soit 0,7% sur les 1.5% souhaités).

Un calcul analogue peut être fait pour chacun des éléments chimiques à introduire dans la soudure, ce qui permet de définir précisément les plages de composition du métal à déposer, c'est-à-dire du couple fil/gaz, en fonction des pièces à souder.

Il est a remarquer que, du fait que le taux de dilution, c'est-à-dire que la proportion de métal de base dans le métal fondu des soudures laser avec fil f'apport, est généralement de l'ordre de 75 à 95%, le métal déposé par le couple fil/gaz, donc le fil d'apport, doit contenir très peu ou, au contraire, beaucoup de manganèse, selon la teneur en manganèse du ou des métaux de base, et le plus souvent de très fortes teneurs en titane et bore par rapport aux plages visées pour le métal fondu, afin que le faible pourcentage de métal déposé dans la soudure permettent d'atteindre les milieux des plages de valeurs recommandées pour ces éléments dans la soudure.

Par ailleurs, concernant les éléments Cr, N, V et Nb, en pratique, il n'y a qu'un très faible intérêt à avoir ces éléments dans la soudure.

Toutefois, leur présence est quasi inévitable de par la dilution avec le métal de base qui contient souvent plusieurs d'entre eux ou parce qu'ils sont présents en tant qu'impuretés résiduelles inévitables dans les métaux à assembler ou dans le produit d'apport (cas de l'azote par exemple).

Il convient donc de veiller à ce que leurs teneurs soient aussi faibles que possibles et n'excèdent jamais les valeurs maximales données dans les tableaux 1 et 2 ci-avant.

En outre, concernant l'élément Ni, la teneur maximale de 10% donnée dans le Tableau 1 correspond au cas très particulier des aciers à 9% de nickel.

Lorsqu'on soude de tels aciers à teneur très élevée en nickel, on s'assure au préalable que la teneur en oxygène n'est pas trop élevée et, le cas échéant, on ajuste cette teneur en oxygène pour la rendre compatible au soudage de ce type d'acier au nickel, c'est-à-dire que préférentiellement on travaille avec des teneurs en oxygène proches de la valeur basse de la plage d'oxygène du Tableau 1.

Hormis ces aciers à forte teneur en nickel, les aciers les plus classiques pourront être soudés efficacement en respectant des teneurs en nickel maximales dans la soudure de l'ordre de 2 à 3% en poids environ.

Compte tenu de ce qui précède, il a été mis en évidence des plages de compositions du métal à déposer par le couple fil/gaz qui permettent d'obtenir les compositions du métal fondu de la soudure des tableaux 1 ou préférentiellement 2. Ces plages sont données dans le Tableau 3 suivant.

Le métal déposé devra préférentiellement avoir une analyse correspondant à la partie haute des plages de composition lorsque le taux de dilution du métal de base dans la soudure est élevé (90 ou 95%). Au contraire, son analyse devra plutôt correspondre à la partie basse des plages indiquées si le taux de dilution est significativement plus faible, par exemple 80% ou moins.

**Tableau 3**

| C | Si | Mn | S | P | O | Ti |
|---|---|---|---|---|---|---|
| < 0,15% (préférence <0.1%) | < 0,6% (préf. 0.1 à 0.5 %) | 0,5 à 12 % (préf. 2 à 3%) | < 0.035 % (préf. <0,025 %) | < 0.035 % (préf. <0,025 %) | 50 à 1500 ppm (préf. 100 à 1000 ppm) | 150 à 1000 ppm (préf. 300 à 800 ppm) |

| Ni | Mo | Cr | N | B | Nb | V | Al |
|---|---|---|---|---|---|---|---|
| < 10% | <0,6% | <1% | 10 à 200 ppm | < 600 ppm | < 0,07 % | < 0,07% | 5 à 1000 ppm (préf. 5 à 200 ppm) |

En outre, comme susmentionné, l'analyse du métal déposé par le couple fil/gaz utilisé lors du soudage laser dépend de l'analyse du fil et du pouvoir d'oxydation du mélange gazeux car celui ci conditionne les coefficients de transfert des divers éléments d'alliage contenus dans le fil.

Dans le cas du soudage laser, le métal d'apport est apporté sous forme d'un fil fusible froid, ce qui implique alors que les échanges chimiques sont généralement relativement faibles et on note, de ce fait, seulement des différences significatives concernant la teneur en oxygène qui peut être augmentée par rapport à celle du fil lorsque celui ci n'en contient qu'une faible quantité (fils massifs dont la teneur en oxygène est inférieure à 150 ppm) ou diminuée lorsque le fil en contient beaucoup comme c'est par exemple le cas de certains fils fourrés type « Metal cored » (i.e. à âme métallique).

En revanche, les teneurs en manganèse, silicium et titane sont toujours plus faibles dans le dépôt que dans le fil, l'écart étant d'autant plus grand que le potentiel d'oxydation du gaz d'assistance laser est important (teneur en oxygène et/ou CO₂).

Ci-après sont donnés des exemples d'évolution des caractéristiques de dureté et de résilience de soudures obtenues par laser avec gaz oxydant et fil d'apport permettant d'ajuster la trempabilité de la soudure.

### Exemple 1 : Influence du gaz d'assistance en soudage laser avec apport de fil froid

Les essais ont été réalisés sur un acier de type P 265 selon EN 10028-2 d'épaisseur 6 mm en utilisant un fil fourré type "sans laitier" (*Metal Cored* en anglais) de diamètre 1,2 mm et dont la composition est donnée dans le Tableau 4 (fil).

Le soudage des pièces se fait bout à bout à bords jointifs et le dispositif laser utilisé à cette fin a une puissance laser de 3,15 kW et une distance focale de 127 mm.

La vitesse d'apport du fil est de 0,8 m/min, la vitesse de soudage de 0,3 m/min et le gaz d'assistance est de l'argon pur ou un mélange Ar + 7,5% en volume de O₂, et est délivré à un débit de 35 l/min.

Les compositions du métal de base, du fil d'apport et des soudures (ou plus précisément du métal fondu), de ces deux soudures réalisées en utilisant deux gaz d'assistance différents, lors du soudage par laser, sont reportées dans le tableau 4 ci après, le solde étant constitué de fer et des inévitables impuretés et résiduels liés à l'élaboration des aciers. Les teneurs sont exprimées en % en poids, sauf pour B et O qui sont en ppm.

Dans ce même Tableau 4 sont aussi indiquées les duretés mesurées dans le métal de base et dans le métal fondu des 2 soudures

**Tableau 4 :**

| influence du gaz d'assistance en soudage laser avec apport de fil "froid" | | | | | | | | | | | | |
|---|---|---|---|---|---|---|---|---|---|---|---|---|
| | Vitesse du fil (m/min) | C | Mn | Si | S | P | Al | B ppm | Ti | 0 ppm | Al/O | Dureté (HV5) |
| Acier | - | 0,119 | 0,95 | 0,15 | 0,006 | 0,012 | 0,037 | <5 | 0,004 | 25 | - | 152 |
| Fil | - | 0,098 | 2,20 | 0,88 | 0,006 | 0,011 | 0,007 | 62 | 0,059 | 2385 | - | |
| Soudure sous Ar (Rep 1) | 0,8 | 0,11 | 0,95 | 0,16 | 0,006 | 0,012 | 0,031 | 11 | 0,006 | 130 | 2,6 | 265 |
| Soudure sous Ar+7,5%O 2 (Rep 2) | 0,8 | 0,10 | 0,92 | 0,12 | 0,006 | 0,012 | 0,020 | 10 | 0,005 | 404 | 0,5 | 186 |

Ces résultats montrent clairement que l'utilisation d'un fil fourré de poudre métallique contenant beaucoup d'oxygène conduit à un enrichissement en oxygène du métal fondu mais celui ci est faible et, dans ce cas, insuffisant pour abaisser le rapport Al/O à une valeur compatible avec la formation de ferrite aciculaire si bien que le métal fondu présente une dureté nettement plus élevée que le métal de base.

En revanche, la combinaison de ce fil avec un mélange gazeux contenant de l'oxygène permet d'abaisser significativement la dureté du métal fondu et de se rapprocher de celle du métal de base conférant ainsi à l'assemblage soudé une plus grande homogénéité de propriétés mécaniques.

Par ailleurs, les courbes de transition en résilience relatives à ces deux soudures, données en figure 4, montrent que simultanément à cette diminution de la dureté, on améliore notablement la ténacité à basse température puisqu'un même niveau de l'énergie de rupture est obtenue à une température plus basse d'environ 20°C lorsque le mélange Ar+7,5% O₂ est utilisé.

En fait, pour la soudure sous argon pur (Rep 1), le rapport Al/O supérieur à 2,5 fait que la transformation de l'austénite dans le métal fondu au cours du refroidissement conduit à des micro-constituants classiques des aciers (bainite) et, de ce fait, à une dureté relativement élevée et à une température de transition en résilience médiocre.

En revanche, l'utilisation du mélange gazeux (Rep 2) contenant de l'argon (ou de l'hélium, à titre alternatif, ou encore un mélange argon/hélium) et de l'oxygène provoque une augmentation de la teneur en oxygène du métal fondu et, par là même, une diminution du rapport Al/O (0,5 dans ce cas), ce qui permet la formation des inclusions favorables à la germination de la ferrite aciculaire, lors du refroidissement et se traduit par une diminution notable de la dureté et une amélioration de la résistance à la rupture fragile (résilience)

### Exemple 2 : Influence du fil d'apport en soudage laser avec gaz oxydant

Les essais ont été réalisés avec des fils fourrés de poudres métalliques de différentes compositions et le mélange Ar+7,5%O₂, dans les mêmes conditions que ceux de l'exemple 1 ci-avant, à l'exception de la vitesse de dévidage du fil qui est variable selon les essais (voir tableau 5).

**Tableau 5 :**

| Influence du fil d'apport en soudage laser avec gaz oxydant | | | | | | | | | | | | |
|---|---|---|---|---|---|---|---|---|---|---|---|---|
| | V fil m/min | C | Mn | Si | S | P | Al | B ppm | Ti | O ppm | Al/O | Dureté (HV5) |
| Acier | - | 0,10 | 0,82 | 0,13 | 0,007 | 0,012 | 0,045 | <5 | 0,004 | 28 | - | 145 |
| Fil « MC1 » | - | 0,08 | 2,10 | 0,80 | 0,011 | 0,008 | 0,007 | 48 | 0,051 | 2590 | - | - |
| Soudure MC1 | 0,62 | 0,09 | 0,87 | 0,15 | 0,008 | 0,012 | 0,024 | 5 | 0,005 | 502 | 0,48 | 188 |
| Fil « MC2 » | - | 0,099 | 3,51 | 0,79 | 0,012 | 0,007 | 0,008 | 141 | 0,074 | 1152 | - | - |
| Soudure MC2 | 0,53 | 0,095 | 0,99 | 0,12 | 0,008 | 0,012 | 0,018 | 15 | 0,007 | 142 | 1,27 | 184 |
| Fil « MC3 » | - | 0,098 | 10,25 | 2,01 | 0,011 | 0,006 | 0,008 | 352 | 0,062 | 2435 | - | - |
| Soudure MC3 | 0,35 | 0,096 | 1,29 | 0,16 | 0,008 | 0,011 | 0,020 | 22 | 0,006 | 388 | 0,51 | 193 |

Les résultats obtenus montrent que, lorsque les conditions sont réunies pour permettre la formation des inclusions nécessaires à la germination de la ferrite aciculaire (Ti > 30 ppm , Al/O < 2,5) et que la teneur en manganèse est supérieure à 0,7 %, la dureté du métal fondu n'est que très peu affectée par les variations de trempabilité (variations importantes de manganèse et de bore dans les exemples ci-dessus), ce qui traduit une grande stabilité de la microstructure qui se développe au refroidissement dans le métal fondu.

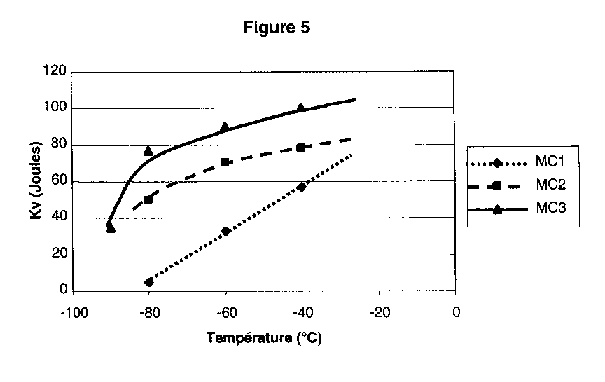

Les courbes de transitions en résilience relatives à ces trois soudures ont été déterminées comme les précédentes avec des éprouvettes Charpy-V réduites de 5x10 mm du fait de l'épaisseur des tôles utilisées pour ces essais, et sont données en Figure 5.

Toutes les soudures obtenues présentent de bonnes valeurs de résilience mais on observe cependant que celles-ci sont d'autant meilleures que la trempabilité du métal fondu est élevée.

La dureté relativement stable associée à ces différentes soudures indique que la nature des micro-constituants apparus au refroidissement est identique pour les trois soudures. Il s'agit principalement d'un peu de ferrite proeutectoïde et majoritairement de ferrite aciculaire.

L'amélioration de la température de transition en résilience avec l'augmentation de la trempabilité traduit uniquement une augmentation de la proportion de la ferrite aciculaire et un affinement de cette microstructure.

Le tableau 5 montre aussi que pour ces exemples, la teneur en titane dans le métal fondu n'est que de l'ordre de 10% en poids de la teneur en titane des fils d'apport et que la teneur en bore est comprise entre 6 et 11 % de celle du fil. Ceci démontre aussi que l'on aurait encore respecté la teneur maximale en titane dans la soudure indiquée dans le Tableau 1 en ayant jusqu'à 1% (10 000 ppm) de titane dans le fil et, celle de bore, en en ayant jusqu'à 1350 ppm dans le fil.

## Revendications

1. Procédé de soudage par faisceau laser avec apport de fil de soudage fusible et gaz de protection, dans lequel ledit fil est fondu par ledit faisceau laser de manière à réaliser un joint de soudure sur au moins une pièce en acier à souder, de préférence la ou les pièces sont en acier ferritique, **caractérisé en ce que** ledit joint de soudure contient de 30 à 1000 ppm en poids de titane, au moins 0.7% en poids de manganèse, de 50 à 1000 ppm en poids d'oxygène, de 5 à 2500 ppm d'aluminium et moins de 10% de nickel.

2. Procédé selon la revendication 1, **caractérisé en ce que** la microstructure dudit joint de soudure comporte de la ferrite aciculaire.

3. Procédé selon l'une des revendications 1 ou 2, **caractérisé en ce que** la soudure comprend de 30 à 800 ppm de titane et/ou de 100 à 450 ppm d'oxygène et/ou de 5 à 1100 ppm d'aluminium, de préférence de 50 à 500 ppm de titane et/ou de 120 à 300 ppm d'oxygène et/ou de 5 à 750 ppm d'aluminium de préférence de 5 à 300 ppm d'aluminium.

4. Procédé selon l'une des revendications 1 à 3, **caractérisé en ce que** la soudure comprend de 0,7 à 2% de manganèse, de préférence de 0.8 à 1.5% de manganèse.

5. Procédé selon l'une des revendications 1 à 4, **caractérisé en ce que** la soudure comprend de l'aluminium et de l'oxygène en des proportions telles que : [Al] / [O] < 2,5 où [Al] est la proportion pondérale d'aluminium et [O] est la proportion pondérale d'oxygène, de préférence [Al] / [O] < 1,5.

6. Procédé selon l'une des revendications 1 à 5, **caractérisé en ce que** la soudure comporte moins de 0,6% molybdène, moins de 80 ppm de bore, moins de 1% de silicium, moins de 0.20% de carbone, moins de 0.035 % de soufre et/ou moins de 0.0035% de phosphore, de préférence moins de 0.3% de molybdène, moins de 50 ppm de bore, de 0.1 à 0.6% de silicium et de 0,03 à 0,13% de carbone.

7. Procédé selon l'une des revendications 1 à 6, **caractérisé en ce que** la soudure comprend moins de 0.07% de niobium, moins de 0.07% de vanadium, de 1 à 200 ppm d'azote et/ou moins de 1% de chrome, de préférence moins de 100 ppm d'azote, moins de 0.03% de niobium, moins de 0.05% de vanadium et moins de 0.3% de chrome.

8. Procédé selon l'une des revendications 1 à 6, **caractérisé en ce que** le gaz d'assistance du faisceau laser de type CO₂ est un mélange gazeux contenant de l'oxygène jusqu'à 20% en volume et/ou du CO₂ jusqu'à 40% en volume.

9. Procédé selon la revendication 8, **caractérisé en ce que** le gaz d'assistance du faisceau laser est un mélange gazeux contenant, en outre, au moins un gaz inerte, de préférence de l'hélium, de l'argon ou leurs mélanges.

10. Procédé selon l'une des revendications 1 à 9, **caractérisé en ce que** le fil fusible est un fil plein ou un fil fourré contenant au moins les éléments titane, manganèse aluminium et fer, et éventuellement bore, molybdène, nickel, carbone.

11. Fil fourré de soudage fourré susceptible d'être utilisé dans un procédé de soudage par faisceau laser avec apport de fil de soudage fusible et gaz de protection selon l'une des revendications 1 à 10, comprenant 300 à 10 000 ppm de titane, de 400 à 5000 ppm d'oxygène, de 5 à 1000 ppm d'aluminium et éventuellement jusqu'à 1500 ppm de bore, le reste étant essentiellement constitué de fer et d'un ou plusieurs éléments d'alliage des aciers ferritiques.

12. Fil selon la revendication 11, **caractérisé en ce qu'**il comprend de 500 à 3000 ppm de titane, de 500 à 3 000 ppm d'oxygène, de 5 à 400 ppm d'aluminium, de 100 à 1000 ppm de bore, le reste étant essentiellement constitué de fer et d'un ou plusieurs éléments d'alliage des aciers ferritiques

13. Fil de soudage selon l'une des revendication 11 ou 12, **caractérisé en ce qu'**il comporte un ou plusieurs éléments d'alliage choisis parmi le manganèse, le silicium, le molybdène, le nickel et le carbone.
